# EUROPEAN PATENT SPECIFICATION

(11) **EP 1 165 347 B1**
(45) Date of publication and mention of the grant of the patent: **26.02.2003**
(21) Application number: 00935258.4
(22) Date of filing: 27.03.2000
(51) Int. Cl.: B60R 1/06

(54) **ATTACHMENT FOR A MIRROR ASSEMBLY**
BEFESTIGUNG FÜR SPIEGELANORDNUNG
FIXATION D'UN ENSEMBLE MIROIR

(30) Priority: 25.03.1999 GB 9906768
(43) Date of publication of application: 02.01.2002
(73) Proprietor: Brachi, Maureen Jacqueline, Ardkeen, Kircubbin, County Down BT22 1TJ (GB)
(72) Inventor: Brachi, Maureen Jacqueline, Ardkeen, Kircubbin, County Down BT22 1TJ (GB)
(74) Representative: McCarthy, Denis Alexis
(86) International application number: GB0001049
(87) International publication number: WO00056576

(56) References cited:
- GB-A- 2 193 474
- US-A- 4 892 401
- US-A- 5 327 294

## Description

The present invention relates to an attachment for a mirror assembly according to the features of the preamble of claim 1. Such an attachment is described in GB-A-2193474. The attachment is particularly suited for use with vehicle mirror assemblies such as wing mirror assemblies.

Mirror assemblies are prone to damage, particularly motor vehicle wing mirror assemblies as they project from the vehicle's body. Typically, however, only the mirror portion is significantly damaged and the assembly housing remains largely intact. Nonetheless, once the mirror portion is broken, the mirror assembly is disabled and a driver's ability to safely negotiate traffic is compromised. This situation often persists for several days until a replacement mirror can be fitted. While the owner of a private vehicle may continue to use a vehicle with a disabled mirror assembly, such a situation with a public or public service vehicle, for example a bus, causes the vehicle, under strict safety rules, to be immediately unfit to be used wherever such a vehicle is, necessitating the vehicle to be parked and the passengers and driver to be stranded until a replacement vehicle can reach them. This is a problem, and particularly so if a public service vehicle is conveying passengers to a destination, for example an airport, where time-critical events are involved.

It is an object of the present invention to mitigate this problem.

Accordingly, the present invention provides an attachment for a mirror assembly, the attachment comprising an image reflecting member and means for coupling the reflecting member to the mirror assembly, the arrangement being such that, when the attachment is coupled to the mirror assembly, the image reflecting member is located substantially in register with the mirror portion area of the mirror assembly.

Preferably, the coupling means comprises a sleeve-like member formed from flexible, resilient material, the reflecting member being carried on the external surface of the sleeve-like member. Alternatively, the coupling means comprises a plurality of sleeve-like straps formed from flexible, resilient material.

Alternatively still, the coupling means comprises at least one strap and means for fastening the, or each, strap about the mirror assembly.

Alternatively, the coupling means comprises a frame formed from rigid material and means for fastening the frame to the mirror assembly.

Preferably, the coupling means is formed from elasticated material such as elasticated cotton, nylon or other natural or synthetic material.

Alternatively, the coupling means is formed from plastics, leather, metal or other suitable material.

Preferably, the attachment further comprises means for engaging it with the mirror assembly, the engaging means being arranged, in use, between the reflecting member and the mirror assembly so that movement of the mirror assembly, which in normal use of the mirror assembly serves to move the mirrored portion of the mirror assembly, is at least partly transmitted to the reflecting member. More preferably, the engaging means comprises a plate member, a portion of which has a substantially convex cross-section. Further preferably, the plate member is fixed to the internal surface of the sleeve-like member, substantially in register with the reflecting member and with the portion of convex cross-section projecting into the sleeve-like member.

An embodiment of the invention will now be described, by way of example, and with reference to the accompanying drawings, in which:-
Fig. 1 is a perspective view of an attachment for a mirror assembly;
Fig. 2 is a perspective view of the attachment of the Fig. 1 in-situ on a mirror assembly; and
Fig. 3 is a schematic cut-away side view of the attachment of Fig. 1.

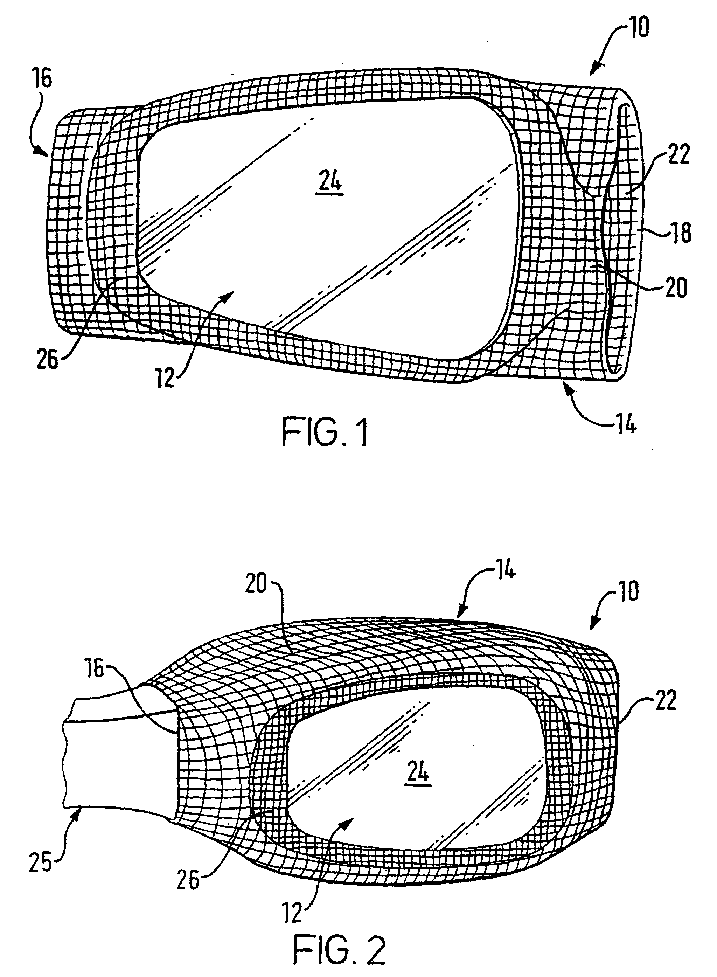

Referring now to Fig. 1 of the drawings, there is shown, generally indicated at 10, an attachment for a mirror assembly. The attachment 10 comprises a reflecting member in the form of a conventional mirror 12 and coupling means in the form of a sleeve 14. The sleeve 14 is formed from elasticated material such as knitted or woven elasticated cotton, nylon or other natural or synthetic material.

The sleeve 14 is generally tubular in shape and has a mouth 16, an internal surface 18 and an external surface 20. In the present embodiment, the opposite end 22 of the sleeve 14 to the mouth 16 is also open but it may equally be closed, i.e. the sleeve 14 may be open-ended or closed at one end. The sleeve 14, when located over a damaged mirror assembly, assumes the exterior shape of the assembly due to the elasticity of the material.

The mirror 12 is fixed to the external surface 20 of the sleeve 14 such that the mirrored surface 24 of the mirror 12 faces outwardly of the sleeve 14. The mirror 12 is fixed in position by any suitable conventional means, for example, glue.

The sleeve 14 is provided with a reinforced region 26 for carrying the mirror 12. The reinforced region 26 is in the form of a reinforcing plate or a substantially planar support formed by coating a portion of the sleeve 14 with a settable material, such as adhesive or gum, to give the reinforced region 26 at least a degree of rigidity. The reinforced region 26 provides a support for the mirror 12 and reduced the possibility of damage to the mirror 12 by shearing, twisting and/or bending forces.

In Fig. 2, the attachment 10 is shown in-situ on the mirror assembly in the form of a vehicle wing mirror assembly 25. The attachment 10 is arranged so that the mirror 12 is located substantially in register with the original mirrored surface, or mirror portion, (not visible) of the mirror assembly 25 or, if the original mirror portion is absent, with the area where the original mirror portion is located in normal use.

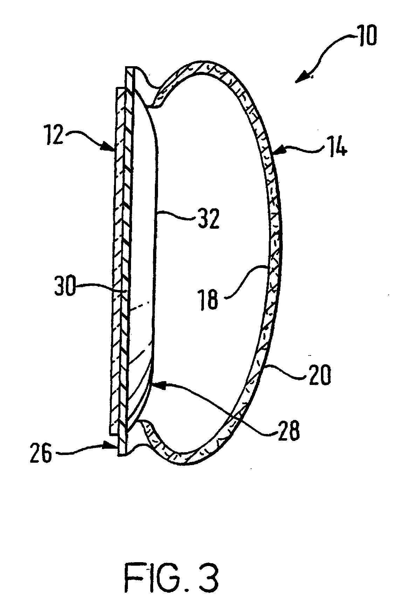

Referring now to Fig. 3, the attachment 10 is further provided with engaging means in the form of a backplate 28. The backplate 28 is formed from a rigid material, such as plastics, metal or wood, and has a substantially flat forward face 30 and a substantially convex rear face 32 such that the backplate 28 is substantially convex in transverse cross-section. Similarly, the rear face 32 is preferably shaped so that the backplate 28 is substantially convex in longitudinal cross-section.

The backplate 28 is located within the sleeve 14 and has its forward face 30 fixed, for example by adhesive through the reinforced region 26 , to the internal surface 18 of the sleeve 14 and substantially in register with the mirror 12. Preferably, the forward face 30 has substantially the same surface area as the mirror 12.

The main purpose of the backplate 28 is to engage, in use, with the mirror assembly so that any movement of the mirror assembly which, in normal use, is intended to move the mirror portion of the mirror assembly, is at least partially transmitted to the mirror 12 via the backplate 28. Typically, when a mirror assembly is damaged, the damage takes the form of a cracked or smashed original mirror portion. In this case, at least part of the original mirror portion remains in place in the mirror assembly. In such circumstances, the backplate 28 is so shaped and dimensioned that it engages with the broken original mirror portion such that any movement or alignment of the original mirror portion by a driver is at least partially transmitted to the mirror 12. Should the original mirror portion be absent, the backplate 28 is arranged for engagement with the movement mechanism (not shown) behind the original mirror or, alternatively, the mirror housing (not shown).

Alternatively, the engaging means may take the form of a frame or one or more engaging bars (not shown) or any other means suitable for engaging with the mirror assembly.

It will be appreciated that the backplate 28 may also serve as the reinforced region 26 thereby obviating the need for a separate reinforcing plate.

In an alternative embodiment (not illustrated), the coupling means may not necessarily be a sleeve. For example, the attachment may comprise a mirror, a reinforcing member and coupling means in the form of one or more straps. The or each strap may be, for example, an elasticated loop or may alternatively comprise two portions with means for fastening each together such as a buckle, a stud device or Velcro (Trade Mark) pads.

Alternatively still, the coupling means may comprise a frame (not shown), formed from, for example, plastics or metal, adapted to be located over and retained by the mirror assembly. The frame may further comprise a clamp or similar fastening means for securing the frame relative to the mirror assembly. Alternatively, the coupling means may comprise one or more clipping members for clipping engagement with the mirror assembly.

The attachment of the invention is suitable for coupling to mirror assemblies of different shapes and sizes. This is particularly true of the illustrated embodiment. It will be appreciated, however, that that attachment may alternatively be shaped, dimensioned and configured to suit particular types of mirror assembly, for example, ones which are produced by a particular manufacturer. In such cases, the flexibility and adaptability of the attachment as provided by the sleeve 14 is less important since the coupling means can be configured specifically for the mirror assembly in question.

In a modification, the image reflecting member may be a reflecting surface applied to the sleeve, or to the reinforced region 26, or in the version in which the back plate 28 serves also as the reinforced region 26, to the back plate 28.

This invention is not limited to the embodiments described herein which may be modified or varied without departing from the scope of the invention as defined in the claims.

## Claims

1. An attachment for a mirror assembly (10) comprising an image reflecting member and means for coupling the reflecting member to the mirror assembly, the arrangement being such that when, in use, the attachment is coupled to the mirror assembly, **characterized in that** the image reflecting member is located substantially in registry with the mirror portion area of the mirror assembly.

2. An attachment as claimed in Claim 1, wherein the coupling means comprises a sleeve-like member (14) formed from flexible, resilient material, the reflecting member being carried on the external surface (20) of the sleeve-like member.

3. An attachment as claimed in Claim 1, wherein the coupling means comprises a plurality of sleeve-like straps formed from flexible, resilient material.

4. An attachment as claimed in Claim 1, wherein the coupling means comprises at least one strap and means for fastening the, or each, strap about the mirror assembly.

5. An attachment as claimed in Claim 1, wherein the coupling means comprises a frame formed from rigid material and means for fastening the frame to the mirror assembly.

6. An attachment as claimed in Claim 2 or 3, wherein the coupling means is formed from elasticated material such as elasticated cotton, nylon or other natural or synthetic material.

7. An attachment as claimed in Claim 4 or 5, wherein the coupling means is formed from plastics, leather, metal or other suitable material.

8. An attachment as claimed in any one of the preceding Claims, wherein the attachment further comprises means for engaging it with the mirror assembly, the engaging means being arranged, in use, between the reflecting member and the mirror assembly so that movement of the mirror assembly, which in normal use of the mirror assembly serves to move the mirrored portion of the mirror assembly, is at least partly transmitted to the reflecting member.

9. An attachment as claimed in Claim 8, wherein the engaging means comprises a plate member (28), a portion of which (32) has a substantially convex cross-section.

10. An attachment as claimed in Claim 9, wherein the plate member is fixed to the internal surface of the sleeve-like member, substantially in register with the reflecting member and with the portion of convex cross-section projecting into the sleeve-like member.

## Patentansprüche

1. Befestigung für eine Spiegelanordnung (10) mit einem bildreflektierenden Glied und einem Mittel zum Koppeln des reflektierenden Glieds an die Spiegelanordnung, wobei die Befestigung so angeordnet wird, dass sie im Gebrauch an die Spiegelanordnung gekoppelt ist, **dadurch gekennzeichnet, dass** das bildreflektierende Glied so angeordnet ist, dass es sich mit dem Spiegelabschnittbereich der Spiegelanordnung im Wesentlichen in Deckung befindet.

2. Befestigung nach Anspruch 1, bei der das Koppelmittel ein aus einem flexiblen, federnden Material gebildetes hülsenartiges. Glied (14) umfasst, wobei das reflektierende Glied auf der Außenfläche (20) des hülsenartigen Glieds getragen wird.

3. Befestigung nach Anspruch 1, bei der das Koppelmittel mehrere aus flexiblem, federndem Material gebildete hülsenartige Laschen umfasst.

4. Befestigung nach Anspruch 1, bei der das Koppelmittel mindestens eine Lasche und ein Mittel zum Befestigen der oder jeder Lasche um die Spiegelanordnung umfasst.

5. Befestigung nach Anspruch 1, bei der das Koppelmittel einen aus steifem Material gebildeten Rahmen und ein Mittel zum Befestigen des Rahmens an der Spiegelanordnung umfasst.

6. Befestigung nach Anspruch 2 oder 3, bei der das Koppelmittel aus elastifiziertem Material wie elastifizierter Baumwolle, elastifiziertem Nylon oder einem anderen elastifizierten natürlichen oder synthetischen Material gebildet ist.

7. Befestigung nach Anspruch 4 oder 5, bei der das Koppelmittel aus Kunststoff, Leder, Metall oder einem anderen geeigneten Material gebildet ist.

8. Befestigung nach einem der vorhergehenden Ansprüche, wobei die Befestigung weiterhin ein Mittel umfasst, das sie in Eingriff mit der Spiegelanordnung bringt, und das Eingriffsmittel im Gebrauch so zwischen dem reflektierenden Glied und der Spiegelanordnung angeordnet ist, dass die Bewegung der Spiegelanordnung, die bei normalem Gebrauch der Spiegelanordnung zur Bewegung des mit einem Spiegel versehenen Abschnitts der Spiegelanordnung dient, mindestens teilweise auf das reflektierende Glied übertragen wird.

9. Befestigung nach Anspruch 8, bei der das Eingriffsmittel ein Plattenglied (28) umfasst, von dem ein Teil (32) einen im Wesentlichen konvexen Querschnitt hat.

10. Befestigung nach Anspruch 9, bei der das Plattenglied an der Innenfläche des hülsenartigen Glieds befestigt ist, und zwar im Wesentlichen in Deckung mit dem reflektierenden Glied und mit dem Abschnitt mit konvexem Querschnitt, der in das hülsenartige Glied vorsteht.

## Revendications

1. Fixation d'un ensemble de miroir (10) comprenant un élément réfléchissant les images et un moyen. pour accoupler l'élément réfléchissant à l'ensemble de miroir, l'agencement étant tel que la fixation est accouplée à l'ensemble de miroir lors de l'utilisation, **caractérisée en ce que** l'élément réfléchissant les images est situé substantiellement en alignement avec la zone de portion de miroir de l'ensemble de miroir.

2. Fixation selon la revendication 1, dans laquelle le moyen d'accouplement comprend un élément de type manchon (14) formé en matériau flexible résilient, l'élément réfléchissant étant porté sur la surface extérieure (20) de l'élément de type manchon.

3. Fixation selon la revendication 1, dans laquelle le moyen d'accouplement comprend une pluralité de sangles de type manchon formées en matériau flexible résilient.

4. Fixation selon la revendication 1, dans laquelle le moyen d'accouplement comprend au moins une sangle et un moyen pour attacher la ou chaque sangle autour de l'ensemble de miroir.

5. Fixation selon la revendication 1, dans laquelle le moyen d'accouplement comprend un cadre formé à partir de matériau rigide et un moyen pour attacher le cadre à l'ensemble de miroir.

6. Fixation selon la revendication 2 ou 3, dans laquelle le moyen d'accouplement est formé à partir de matériau élastique tel que du coton, du nylon ou un autre matériau naturel ou synthétique élastique.

7. Fixation selon la revendication 4 ou 5, dans laquelle le moyen d'accouplement est formé à partir de plastique, de cuir, de métal ou d'un autre matériau approprié.

8. Fixation selon l'une quelconque des revendications précédentes, dans laquelle la fixation comprend en outre un moyen pour l'engager avec l'ensemble de miroir, le moyen d'engagement étant prévu, lors de l'utilisation, entre l'élément réfléchissant et l'ensemble de miroir de sorte que le mouvement de l'ensemble de miroir, qui, lors de l'utilisation normale de l'ensemble de miroir, sert à déplacer la portion pourvue du miroir de l'ensemble de miroir, est au moins partiellement transmis à l'élément réfléchissant.

9. Fixation selon la revendication 8, dans laquelle le moyen d'engagement comprend un élément de plaque (28), dont une portion (32) a une section transversale substantiellement convexe.

10. Fixation selon la revendication 9, dans laquelle l'élément de plaque est fixé à la surface interne de l'élément de type manchon, substantiellement en alignement avec l'élément réfléchissant et avec la portion de section transversale convexe saillant dans l'élément de type manchon.
